# EUROPÄISCHE PATENTSCHRIFT

(11) **EP 2 703 246 B1**
(45) Veröffentlichungstag und Bekanntmachung des Hinweises auf die Patenterteilung: **26.12.2018**
(21) Anmeldenummer: 13175643.9
(22) Anmeldetag: 09.07.2013
(51) Int. Cl.: B61F 5/10, F16F 9/00, C21D 9/00

(54) **Verfahren zur Herstellung eines Luftfederdeckels**
Method for making a pneumatic spring lid
Procédé de fabrication d'un couvercle d'amortisseur pneumatique

(30) Priorität: 30.08.2012 DE 102012108017
(43) Veröffentlichungstag der Anmeldung: 05.03.2014
(73) Patentinhaber: ContiTech Luftfedersysteme GmbH, 30165 Hannover (DE)
(72) Erfinder: Kranz, Harald, 31008 Elze (DE); Korduan, Olaf, 30629 Hannover (DE)
(74) Vertreter: Kilsch, Armin Ralph

(56) Entgegenhaltungen:
- EP-A1- 2 165 911
- DE-A1- 2 617 294
- US-A- 3 200 771
- US-A- 3 826 507
- US-A- 3 834 320

## Beschreibung

Die Erfindung betrifft ein Verfahren zur Herstellung eines Luftfederdeckels eines Luftfedersystems für ein Schienenfahrzeug, wobei der Luftfederdeckel topfförmig ausgebildet ist und in einem Gussverfahren, insbesondere im Aluminiumgussverfahren hergestellt wird. Der Luftfederdeckel weist eine obere Wand, eine seitliche Wand und einen Flansch auf.

Ein solches Verfahren zur Herstellung eines Lufterdeckels ist z.B. aus der EP-A1-2 165 911 bekannt.

Luftfedersysteme für Schienenfahrzeuge sind oft als Sekundärfedersystem zwischen einem gefederten Wagenkasten und einem als Fahrwerk dienenden Drehgestell oder Fahrwerksschemel angeordnet. Das Luftfedersystem weist dabei in der Regel eine Luftfeder mit einem Luftfedervolumen in einem Arbeits- oder Druckraum auf, welcher in einem zwischen Luftfederdeckel, der so genannten Oberplatte, und fahrwerkseitiger Felge angeordnetem Luftfederbalg ausgebildet ist.

Der Luftfederdeckel bzw. die Oberplatte steht mit dem Wagenkasten in Verbindung. Weiterhin weist das Federsystem ein mit dem Arbeits- oder Druckraum zusammenwirkendes und im Luftfederdeckel ausgeformtes Zusatzvolumen auf, sowie eine unterhalb der Luftfeder angeordnete und mit letzterer in einer Reihenschaltung oder Parallelschaltung zusammenwirkende Zusatzfeder aus elastomerem Werkstoff, vorzugsweise aus Gummi.

Weiterhin befindet sich ein Puffer/Anschlagpuffer aus elastomerem Werkstoff im Arbeits- oder Druckraum. Der Puffer/Anschlagpuffer ist zwischen karosserieseitigem Luftfederdeckel und fahrwerkseitiger Felge wirkend vorgesehen. Als Felge wird bei einem Luftfedersystem für ein Schienenfahrzeug üblicherweise der untere Sitz des Luftfederbalges angesehen. Dieser Sitz befindet sich bei einer Reihenschaltung üblicherweise auf der Zusatzfeder.

Im normalen Betriebszustand eines solchen Luftfedersystems wird das Zusatzvolumen verwendet, um die Kennung der Federung zu verändern und damit eine komfortable "weichere" Federung einzustellen.

Solche Federsysteme sind für Schienenfahrzeuge bekannt. Die Luftfederung wirkt im Betriebszustand zusammen mit einer Zusatzfeder aus elastomerem Werkstoff. Darüber hinaus ist ein Puffervorgesehen, ebenfalls aus elastomerem Werkstoff, welche zwischen Karosserie bzw. Wagenkasten und Fahrwerk bzw. Fahrgestell oder Fahrschemel des Fahrzeuges so angeordnet ist, dass bei einem Ausfall der Luftfeder die Karosserie am Fahrwerk durch den Puffer und die Zusatzfeder abgestützt wird.

Es gibt auch Konstruktionen, bei denen kein separater Puffer vorhanden ist und die Zusatzfeder die Funktion allein aufnimmt. In diesen Fällen setzt bei Luftausfall dann die Oberplatte bzw. der Luftfederdeckel direkt auf der Felge auf.

Die gelegentlich mit einer gewissen Unschärfe verwendeten Begriffe "Primärfederung / Primärfedersystem" und "Sekundärfederung / Sekundärfedersystem" sollen hier kurz definiert werden:
- Unter einer "Primärfederung" versteht man bei heutigen Fahrzeugen die erste und grundlegende Federung zwischen der ungefederten Radmasse und dem Fahrgestell bzw. dem Achsträger eines Fahrzeugs. Bei einem PKW oder LKW wird diese Primärfederung durch die federnden Eigenschaften eines Luftreifens bereitgestellt, d.h. der Luftreifen ist die "Primärfeder".
   Bei einem Schienenfahrzeug mit Rädern aus Metall ist es demgegenüber erforderlich, die die Radachse mit dem Radsatz aufnehmenden Achsgehäuse gegenüber dem Drehgestell/Fahrgestell mit einer Primärfederung abzufedern. Diese Primärfederung besteht üblicherweise aus material- oder formelastischen Bauteilen, wie etwa Schraubenfedern, Blattfedern, Gummi-Metall-Federn etc. und ist in der Regel zur Federung hochfrequenter Belastungen ausgelegt. Dies ist auch bei modernen Rädern üblich, die zur Reduzierung der Geräuschentwicklung aus einer inneren Radscheibe, einem umgebenden Gummielement und schließlich einem äußeren Radkranz aufgebaut sind.
- Unter einer "Sekundärfederung" versteht man bei Fahrzeugen die Federung zwischen dem Fahrgestell bzw. dem Achsträger eines Fahrzeugs und seiner Karosserie oder seinem Aufbau bzw. Wagenkasten. Bei PKW und LKW wird diese Sekundärfederung durch gedämpfte Stahlfedern, Luftfedern oder Federbeine zwischen Fahrwerk und Karosserie erreicht.

Neben Konstruktionen mit Hydrofedern besteht eine Bauart einer solchen Sekundärfederung für Schienenfahrzeuge in der auch hier beanspruchten besonders komfortabler Ausführung aus einer Luftfeder und einer Gummi-Metall-Feder als Zusatzfeder, welche in Reihe geschaltet sind. Die Luftfeder mit Zusatzvolumen dient dabei auch z.B. der beladungsabhängigen Höhenregulierung und ist auf niederfrequente Belastungen ausgelegt.

Die Regelung des Fahrniveaus erfolgt üblicherweise durch die Sekundärfederung unter Berücksichtigung der Gesamthöhe bzw. des gesamtem Federweges des Sekundärfederungssystems, wobei sich der Federweg aus den Federwegen/Federhöhen der beiden Komponenten, d.h. Luftfeder und der Zusatzfeder ergibt. Im Allgemeinen erfolgt die Regelung so, dass bei unterschiedlichen Beladungszuständen eine konstante Höhe eingestellt wird.

Die US 3,826,507 offenbart eine Luftfeder für ein Schienenfahrzeug, welche mit einer Zusatzfeder versehen ist. Die Zusatzfeder ist dabei als Blockfeder aus Gummi ausgebildet und größtenteils von der Luftfeder umgeben. Die Zusatzfeder ist zudem so angeordnet, dass der Wagenkasten bei einem Luftverlust in der Luftfeder auf der gleichzeitig als Notfeder ausgebildeten Zusatzfeder aufsetzen kann.

Häufig wirken auf den Wagenkasten eines Schienenfahrzeuges recht starke Querkräfte, insbesondere bei starken lateralen Auslenkungen aufgrund von schnellen und/oder engen Kurvendurchfahrten. Diese Querkräfte müssen in den Fahrwerken abgefangen werden, wobei auch das zwischen Wagenkasten und Fahrwerk angeordnete Luftfedersystem entstehende starke Lateralkräfte abfängt und einen zu großen Versatz des Wagenkastens verhindert. Dementsprechend sind die Bauteile der Luftfedersysteme, insbesondere der mit dem Wagenkasten verbundene Deckel der eigentlichen Luftfeder, welcher zur Bereitstellung des Zusatzvolumens vorbaut, d.h. gegen den Wagenkasten vorspringt, erheblichen Belastungen durch stoßartige einwirkende Kräfte ausgesetzt.

Demzufolge sind an die Herstellung eines topfförmigen Luftfederdeckels mit Zusatzvolumen für ein solches Luftfedersystem eines Schienenfahrzeuges hohe Anforderungen im Hinblick auf Festigkeiten und die damit erforderlichen Vergütungsbehandlungen zu stellen, insbesondere bei Gussverfahren aus Aluminium, bei welchen durch ungenaue Prozessführung schnell Inhomogenitäten im Material entstehen können, die zu einem Festigkeitsverlust führen können.

Für die Erfindung bestand daher die Aufgabe, ein Herstellverfahren für einen hochbelasteten und gleichzeitig leichten Luftfederdeckel für ein solches Luftfedersystem eines Schienenfahrzeuges bereitzustellen, durch welches der Luftfederdeckel eine hohe Festigkeit erreicht, in seiner Funktion und konstruktiven Auslegung keinen Einschränkungen unterworfen ist und welches trotzdem eine kostengünstige Herstellung erlaubt.

Gelöst wird diese Aufgabe durch die Merkmale des Hauptanspruchs. Weitere vorteilhafte Ausbildungen sind in den Unteransprüchen offenbart.

Dabei erfolgt nach dem Gießen eine Vergütungsbehandlung des Luftfederdeckels, bei der der Luftfederdeckel aufrecht und mit oben befindlicher oberer Wand in ein Kühlmedium eingetaucht wird, wobei die Entlüftung des im topfförmigen Deckel eingeschlossenen Volumens durch in der oberen Wand des Luftfederdeckels vorgesehene Entlüftungsöffnungen erfolgt, welche in vorspringenden Funktionsbauteilen des Luftfederdeckels so angeordnet sind, dass der Deckelinnenraum während des gesamten Eintauchvorgangs in das Kühlmedium permanent entlüftet wird.

Eine solche Verfahrensführung und Entlüftung vereinfacht den kritischen Vergütungsprozess.

Dieser sehr sorgsam durchzuführende Vergütungsprozess erfolgt üblicherweise dadurch, dass der Luftfederdeckel zunächst in einem Ofen erhitzt wird und dann sehr schnell aufrecht, d.h. mit oben befindlicher oberer Wand und dadurch mit dem Flansch zuerst in ein Kühl-Öl getaucht wird. Bedingt durch die Form und die erforderlichen Abkühlkurven der einzelnen Deckelbereiche des Deckels ist es nötig, den Flansch, den Rand und die obere Wand möglichst gleichzeitig zu kühlen, um keine Spannungsrisse oder Inhomogenitäten zu erhalten.

Durch die Topfform bilden sich jedoch in dem dann durch Kühl-Öl/Kühlflüssigkeit nach unten abgeschlossenen Bereichen des Zusatzvolumens Öldampf und Ölblasen, die den Abschreckprozess empfindlich stören können. Bei den erfindungsgemäß vorgesehenen Öffnungen in aus konstruktiven Gründen notwendigen Bauteilen kann das nicht passieren, da durch diese Öffnungen der beim Abschrecken entstehende Öldampf sowie eingeschlossene Luft problemlos austreten können.

Eine vorteilhafte Ausbildung des Verfahrens besteht darin, die Entlüftung bis zum Ende des Vergütungsprozesses dadurch sicherzustellen, dass die Entlüftung durch Bohrungen in von der Deckelaußenseite aus vorspringenden Zapfen erfolgt, die zur Positionierung oder Halterung des Luftfederdeckels am Wagenkasten vorgesehen sind. Die Zapfen bilden dann während der Vergütung eine Art Steigrohre, die bis zum Prozessende funktionsfähig sind, ohne dass durch die steigende Oberfläche des Kühlmediums bzw. der Kühlflüssigkeit abgeschlossene Hohlräume im Deckelvolumen/Zusatzvolumen entstehen.

Eine vorteilhafte Ausbildung des Verfahrens besteht darin, dass die Entlüftungsöffnungen so ausgebildet sind, dass sie nach der Vergütungsbehandlung verschließbar sind. Damit ist schon während der Herstellung des Luftfederdeckels durch Gussverfahren sowohl eine ausreichende Entlüftungsmöglichkeit für nachfolgende Vergütungsprozesse geschaffen als auch dafür gesorgt, dass nach der Herstellung der Luftfederdeckel wieder luftdicht zur Verfügung steht, um das Zusatzvolumen aufzunehmen. Das Verschließen kann z. B. mit gedichteten Schrauben erfolgen.

Anhand eines Ausführungsbeispieles soll ein Luftfederdeckel näher erläutert werden, der durch das erfindungsgemäße Verfahren hergestellt wurde. Es zeigen
- Fig. 1: eine Luftfedersystem mit einem erfindungsgemäß hergestellten Luftfederdeckel
- Fig. 2: den Luftfederdeckel gemäß Fig. 1 in der Aufsicht
- Fig. 3: das Luftfedersystem mit einem Luftfederdeckel gemäß Fig. 1 in einer perspektivischen Ansicht
- Fig. 4: den vorderen Teil eines schienengebundenen Kurzstreckentriebwagens, ausgerüstet mit einem Luftfedersystem mit einem erfindungsgemäß hergestellten Luftfederdeckel

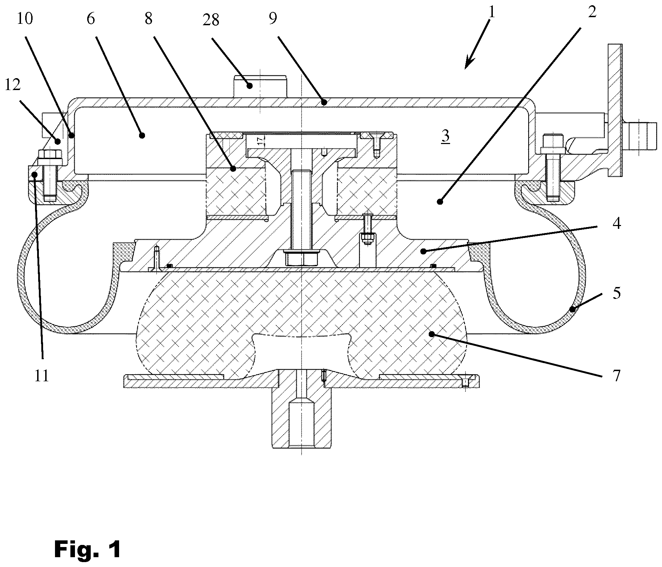

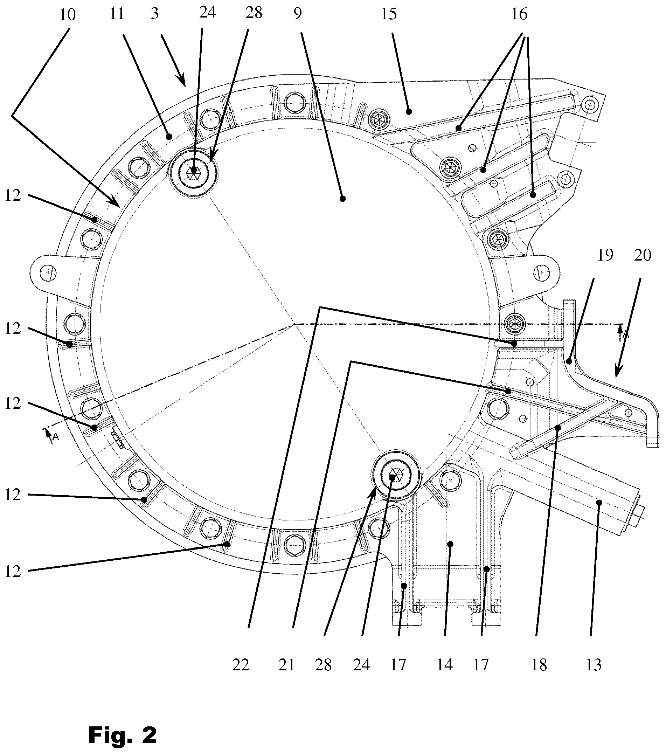

Fig. 1 zeigt erfindungsgemäß hergestellten Luftfederdeckel 3 eines Luftfedersystems 1 für ein Schienenfahrzeug im Schnitt A-A der Fig. 2, angeordnet zwischen einem Wagenkasten bzw. einer Karosserie und einem ungefedertem Fahrwerksteil, beide hier nicht näher dargestellt. Das Federsystem stellt hier das Sekundärfedersystem dar. Das Federsystem 1 weist eine Luftfeder mit einem Luftfedervolumen in einem Arbeits- oder Druckraum 2 auf, welcher in einem zwischen Befestigungsplatte bzw. Luftfederdeckel 3 und fahrwerkseitiger Felge 4 angeordnetem Luftfederbalg 5 ausgebildet ist. Das mit dem Arbeits- oder Druckraum 2 zusammenwirkendes Zusatzvolumen 6 ist im Luftfederdeckel 3 ausgeformt.

Unterhalb der Luftfeder bzw. des Luftfederbalges 5 ist eine mit der Luftfeder in einer Reihenschaltung zusammenwirkende Zusatzfeder 7 aus Gummi angeordnet.

Das Luftfedersystem weist auch einen aus Gummi ausgebildeten Puffer 8 auf, der in Form eines Anschlagpuffers zwischen zur Abstützung wirkt.

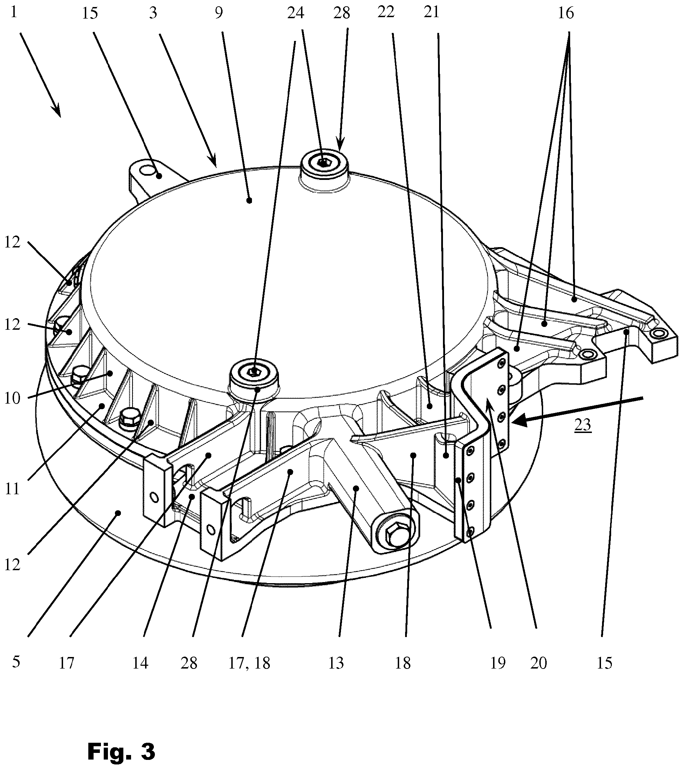

Fig. 2 zeigt den Luftfederdeckel 3 gemäß Fig. 1 in der Aufsicht von oben, während Fig. 3 den Luftfederdeckel 3 gemäß Fig. 1 im Luftfedersystem in einer perspektivischen Ansicht von schräg oben zeigt.

In der Zusammenschau der Figuren, insbesondere der Fig. 2 und 3, erkennt man den topfförmig ausgebildeten Luftfederdeckel 3, der das Zusatzvolumen 6 aufnimmt.

Der Luftfederdeckel 3 weist eine obere Wand 9, eine seitliche Wand 10 und einem Flansch 11 auf ist in seinen äußeren Randbereichen mit rippenförmig ausgebildeten verstärkenden Konstruktionselementen 12 versehen, von denen hier der besseren Übersicht halber nur einige mit Bezugsziffern versehen sind.

Die am Luftfederdeckel 3 angeordneten und für den Betrieb des Luftfedersystems erforderliche Funktions- und Leitungselemente, hier der Luftanschlussstutzen 13 für die Luftversorgung und die Anschlussflansche 14 und15 für den Wagenkasten sind mit den rippenförmigen Konstruktionselementen 16, 17 und 18 so verbunden und so in letztere integriert, dass Luftanschlussstutzen 13, Anschlussflansche 15 und Konstruktionselemente 16, 17 und 18 zusammenwirkend die Steifigkeit und die Form- oder Gestaltfestigkeit des Luftfederdeckels 3 deutlich erhöhen.

Luftanschlussstutzen 13, Anschlussflansche 14 und 15 und Konstruktionselemente 16, 17 und 18 sind dabei auch und ähnlich wie die Konstruktionselemente 12 am Flansch 11 bzw. an der seitlichen Wand 10 abgestützt.

Außerhalb der Deckelbereiche, in denen Luftanschlussstutzen 13 oder Anschlussflansche 14 oder 15 angeordnet sind, sind die verstärkenden Konstruktionselemente als über die Höhe des Deckels sich verjüngende Verstärkungsrippen 12 zwischen Flansch 11 und Deckelwand 10 ausgebildet.

Der Luftfederdeckel 3 ist darüberhinaus mit einer Begrenzungseinrichtungen 19 versehen, welche eine Anschlags- oder Prallflächen 20 für solche Karosserie- oder Fahrwerksteile bereitstellt, die den Luftfederdeckel im Betriebszustand benachbart umgeben und die z.B. bei einer starken Wankbewegung des Wagenkastens an die Begrenzungseinrichtungen bzw. deren Anschlags- oder Prallflächen anschlagen können.

Die Begrenzungseinrichtung 19 ist mit den rippenförmig ausgebildeten Konstruktionselemente 21, 22 und 18 am Flansch 11, an der seitlichen Wand 10 und am Luftanschlussstutzen 13 abgestützt, wobei insbesondere die Hauptrippe 18 längs der Hauptbelastungsrichtung 23 beim Anschlag oder Aufprall ausgerichtet ist. Die Hauptrippe 18 kreuzt sich dabei mit dem rippenförmigen Konstruktionselement 21.

Der Luftfederdeckel 3 weist nun in seiner oberen Wand 9 verschließbare Entlüftungsöffnungen 24 auf, welche in Zapfen 28 integriert sind, die zur Positionierung des Luftfederdeckels 3 am Wagenkasten vorgesehen sind. Durch diese Entlüftungsöffnungen 24 erfolgt während des Vergütungsprozesses, bei dem der Luftfederdeckel 3 aufrecht in ein Kühl-Öl getaucht wird, die Entlüftung des im topfförmigen Deckel eingeschlossenen Volumens. Der Deckelinnenraum wird während des gesamten Eintauchvorgangs in das Kühlmedium permanent entlüftet, so dass definiert abgekühlt und damit vergütet werden kann.

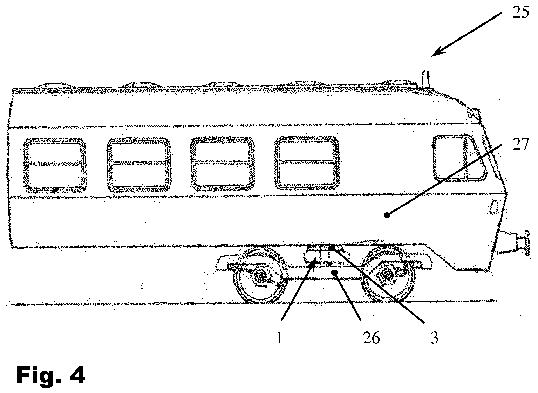

Fig. 4 zeigt noch einmal zur Verdeutlichung den vorderen Teil eines schienengebundenen Kurzstreckentriebwagens 25 mit einem Luftfedersystem mit dem erfindungsgemäß hergestellten Luftfederdeckel. Der Fahrschemel bzw. das Fahrgestell 26 ist über das Luftfedersystem 1 mit dem Wagenkasten 27 des Triebwagens 25 verbunden, wobei der erfindungsgemäß hergestellte Luftfederdeckel 3 den Wagenkasten positioniert und damit erheblichen Belastungen durch stoßartige einwirkende Lateralkräfte ausgesetzt ist.

### Bezugszeichenliste

### (Teil der Beschreibung)

- 1: Luftfedersystem
- 2: Arbeits- oder Druckraum
- 3: Luftfederdeckel / Befestigungsplatte mit Zusatzvolumen
- 4: Felge
- 5: Luftfederbalg
- 6: Zusatzvolumen
- 7: Zusatzfeder
- 8: Puffer
- 9: Obere Wand
- 10: Seitliche Wand
- 11: Flansch
- 12: Verstärkendes Konstruktionselement, rippenförmig
- 13: Luftanschlussstutzen
- 14: Anschlussflansch
- 15: Anschlussflansch
- 16: Verstärkendes Konstruktionselement, rippenförmig
- 17: Verstärkendes Konstruktionselement, rippenförmig
- 18: Verstärkendes Konstruktionselement, rippenförmig
- 19: Begrenzungseinrichtung
- 20: Anschlags- oder Prallfläche
- 21: Verstärkendes Konstruktionselement, rippenförmig
- 22: Verstärkendes Konstruktionselement, rippenförmig
- 23: Hauptbelastungsrichtung relativ zur Anschlags- und Prallfläche
- 24: verschließbare Entlüftungsöffnungen in der oberen Wand
- 25: Kurzstreckentriebwagen
- 26: Fahrgestell
- 27: Wagenkasten
- 28: Zapfen zur Positionierung des Luftfederdeckels am Wagenkasten

## Patentansprüche

1. Verfahren zur Herstellung eines Luftfederdeckels (3) eines Luftfedersystems (1) für ein Schienenfahrzeug (13), wobei der Luftfederdeckel (3) topfförmig ausgebildet ist und eine obere Wand (9), eine seitliche Wand (10) und einen Flansch (11) aufweist und wobei der Luftfederdeckel (3) im Gussverfahren, insbesondere im Aluminiumgussverfahren, hergestellt wird, **dadurch gekennzeichnet, dass** nach dem Gießen eine Vergütungsbehandlung des Luftfederdeckels (3) erfolgt, bei der der Luftfederdeckel (3) aufrecht, d.h. mit oben befindlicher oberen Wand (9) und dadurch mit dem Flansch zuerst in ein Kühlmedium eingetaucht wird, wobei die Entlüftung des im topfförmigen Deckel eingeschlossenen Volumens durch in der oberen Wand (9) des Luftfederdeckels (3) vorgesehene Entlüftungsöffnungen (24) erfolgt, welche in vorspringenden Funktionsbauteilen (28) des Luftfederdeckels (3) so angeordnet sind, dass der Deckelinnenraum während des gesamten Eintauchvorgangs in das Kühlmedium permanent entlüftet wird.

2. Verfahren nach Anspruch 1, bei dem Entlüftung durch Bohrungen (24) in vorspringenden Zapfen (28) erfolgt, die zur Positionierung oder Halterung des Luftfederdeckels (3) am Wagenkasten vorgesehen sind.

3. Verfahren nach Anspruch 1 oder 2, bei dem die Entlüftungsöffnungen (24) so ausgebildet sind, dass sie nach der Vergütungsbehandlung verschließbar sind.

## Claims

1. Method for producing an air spring cover (3) of an air spring system (1) for a rail vehicle (13), the air spring cover (3) being formed in a cup-shaped manner and having an upper wall (9), a lateral wall (10) and a flange (11) and the air spring cover (3) being produced by a casting process, in particular by an aluminium casting process, **characterized in that** the casting is followed by carrying out an annealing treatment of the air spring cover (3), in which the air spring cover (3) is immersed in an upright state, i.e. with the upper wall (9) at the top and as result flange-first, into a cooling medium, the venting of the volume enclosed in the cup-shaped cover taking place through venting openings (24) that are provided in the upper wall (9) of the air spring cover (3) and are arranged in projecting functional components (28) of the air spring cover (3) in such a way that the interior space of the cover is permanently vented during the entire process of immersion in the cooling medium.

2. Method according to Claim 1, in which venting takes place through bores (24) in projecting pins (28) that are provided for positioning or securing the air spring cover (3) on the carriage body.

3. Method according to Claim 1 or 2, in which the venting openings (24) are formed such that they can be closed after the annealing treatment.

## Revendications

1. Procédé de fabrication d'un couvercle de ressort pneumatique (3) d'un système de ressort pneumatique (1) pour un véhicule ferroviaire (13), le couvercle de ressort pneumatique (3) étant réalisé en forme de pot et présentant une paroi supérieure (9), une paroi latérale (10) et une bride (11) et le couvercle de ressort pneumatique (3) étant fabriqué par un procédé de coulée, en particulier un procédé de coulée d'aluminium, **caractérisé en ce qu'**après la coulée, un traitement thermique du couvercle de ressort pneumatique (3) a lieu, au cours duquel le couvercle de ressort pneumatique (3) est plongé dans un milieu de refroidissement en position verticale, c'est-à-dire avec la paroi supérieure (9) se trouvant en haut et de ce fait avec la bride en premier, le désaérage du volume inclus dans le couvercle en forme de pot s'effectuant par des ouvertures de désaérage (24) prévues dans la paroi supérieure (9) du couvercle de ressort pneumatique (3), lesquelles sont disposées dans des composants fonctionnels saillants (28) du couvercle de ressort pneumatique (3) de telle sorte que l'espace interne du couvercle soit désaéré de manière permanente pendant toute l'opération d'immersion dans le milieu de refroidissement.

2. Procédé selon la revendication 1, dans lequel le désaérage s'effectue par des alésages (24) dans des tourillons saillants (28), qui sont prévus pour positionner ou retenir le couvercle de ressort pneumatique (3) contre le châssis du wagon.

3. Procédé selon la revendication 1 ou 2, dans lequel les ouvertures de désaérage (24) sont réalisées de manière à pouvoir être fermées après le traitement thermique.
